# EUROPEAN PATENT SPECIFICATION

(11) **EP 1 657 114 B1**
(45) Date of publication and mention of the grant of the patent: **04.01.2012**
(21) Application number: 04027113.2
(22) Date of filing: 15.11.2004
(51) Int. Cl.: B60R 11/02

(54) **Navigation device of a vehicle and memory unit mounting system**
Kraftfahrzeug-Navigationsvorrichtung und Speichereinheit Befestigungseinrichtung
Appareil de navigation pour véhicule et système de montage d'une unité mémoire

(43) Date of publication of application: 17.05.2006
(73) Proprietor: Harman Becker Automotive Systems GmbH, 76307 Karlsbad (DE)
(72) Inventor: Knappich, Walter, 76337 Waldbronn (DE); Förderer, Frank, 76571 Gaggenau (DE)
(74) Representative: Bertsch, Florian Oliver

(56) References cited:
- PATENT ABSTRACTS OF JAPAN vol. 016, no. 404 (P-1410), 26 August 1992 (1992-08-26) & JP 04 134689 A (MATSUSHITA ELECTRIC IND CO LTD), 8 May 1992 (1992-05-08)
- PATENT ABSTRACTS OF JAPAN vol. 011, no. 397 (M-655), 25 December 1987 (1987-12-25) & JP 62 165040 A (MATSUSHITA ELECTRIC IND CO LTD), 21 July 1987 (1987-07-21)
- PATENT ABSTRACTS OF JAPAN vol. 011, no. 066 (P-552), 27 February 1987 (1987-02-27) & JP 61 229295 A (MITSUBISHI ELECTRIC CORP), 13 October 1986 (1986-10-13)
- PATENT ABSTRACTS OF JAPAN vol. 011, no. 344 (M-640), 11 November 1987 (1987-11-11) & JP 62 124332 A (MATSUSHITA ELECTRIC IND CO LTD), 5 June 1987 (1987-06-05)
- PATENT ABSTRACTS OF JAPAN vol. 1997, no. 03, 31 March 1997 (1997-03-31) & JP 08 287665 A (MATSUSHITA ELECTRIC IND CO LTD), 1 November 1996 (1996-11-01)
- PATENT ABSTRACTS OF JAPAN vol. 1998, no. 07, 31 March 1998 (1998-03-31) & JP 07 078462 A (SAMSUNG ELECTRON CO LTD), 20 March 1995 (1995-03-20)

## Description

This invention relates to a navigation system of a vehicle and to a memory unit mounting system for mounting a memory unit in a housing of an onboard electronic system of a vehicle. The invention relates especially to a navigation device comprising a memory unit like a hard disk and to a mounting system for mounting said hard disk in the navigation device.

### Related art

Computer-based navigation systems are available that provide end-users, such as drivers of vehicles, in which the navigation devices are installed, with various navigation functions or features. The navigation devices are able to determine an optimum route from the present position to a predetermined destination. In order to provide the navigation functions, the navigation device uses detailed data basis that include data which represent physical features in a geographic region. The detailed data base may include data representing the road and intersections and may also include information about the roads such as turn restrictions, speed limits, address ranges and so on. Furthermore, a data base may comprise a point of interest (POI) related information providing the end-user with information about monuments, sightseeing places, restaurants, etc.

Given the relatively large size of the data base, geographic data are often stored on a memory unit such as a CD-rom disk. Due to the fact that the information available to the user is getting larger and larger, navigation systems have been developed comprising hard disks. When hard disks are used in navigation devices in vehicles, several problems may arise. First of all, a navigation device has to read data from the hard disk or fixed disk, when the vehicle is in motion so that the hard disk or memory unit is exposed to vibration or shocks. It is known to fixly connect the memory unit to the housing of the navigation device. However, in this case a proper functioning of reading data from the memory unit cannot be assured in all circumstances, as shocks or vibrations due to the road surface on which the vehicle is moving may disturb the reading of data. The use of damping elements is known in combination with disk drives, by way of example in portable computers, such as laptops. However, in these applications the disk drive is locked during transportation and the damping elements are mechanically locked, as the damping elements could be destroyed or displaced within the adsorbing mechanism under a strong shock, e.g. when the electronic device comprising the disk drive falls down.

JP 04 134689-A discloses a mounting system according to the preamble of claim 1.

A need exists to provide a mounting system in which a memory unit, such as a hard disk, is installed and which is well protected against vibrations or shocks, even during transportation.

### Summary of the invention

This need is met by a memory unit mounting system as mentioned in the independent claim. In the dependent claims preferred embodiments of the invention are described.

According to the invention, a memory unit mounting system for mounting a memory unit in a housing of an onboard electronic system of a vehicle is provided, the mounting system comprising a support plate on which said memory unit is disposed and comprising an absorbing means arranged between said support plate and said memory unit for protecting said memory unit against shock and/or vibration. According to one aspect of the invention, the absorbing means comprises at least one spring element supporting said memory unit and at least one damping element for absorbing shock and/or vibration of the memory unit. As discussed above, the combination of the spring element and the damping element helps to obtain good damping characteristics, so that the memory unit can also be used in an environment, where the system is exposed to vibrations or shocks.

The absorbing means is able to absorb shocks to the memory unit in direction of the support plate, as the absorbing means is arranged between the support plate and the memory unit. During the manufacturing process of the navigation device, the memory unit mounting system is often manufactured as a separate module or sub-assembly of the navigation device. As a consequence, the memory unit mounting system may be transported as a sub-assembly. During the transport or during the manufacturing process of the complete navigation device, the memory unit mounting system need not necessarily to have the same orientation as when incorporated into the navigation device. It is also possible that the memory unit is not arranged above the support plate, so that the spring element arranged between the support plate and the memory unit will support the weight of the memory unit. When the memory unit mounting system is arranged the other way round, it has to be ensured that the arrangement of the different elements, i.e. of the memory unit, the support plate and the absorbing means, rests the same. Furthermore, it has to be assured that the spring element and the damping element stay at predetermined places. Therefore, according to the invention, a fixing strip is provided, which is attached to the support plate and wrapped around at least a part of the memory unit, which limits the vertical movement of the memory unit in the direction opposite to the support plate. The movement of the memory unit in the direction of the support plate is limited by the spring element and by the damping element. The fixing strip helps to limit the movement of the support plate so that the spring element and the damping element will not jump out of their position. The fixing strip can be made of a flexible material, e.g. PTFE (polytetrafluorethylen). This material is a highly resistant material which does have resilient characteristics, but which does not brake when large forces are applied to it.

According to a further aspect of the invention, in the memory unit mounting system on which the memory unit is disposed, the spring element, which supports the memory unit, does not directly contact the memory unit but does support the frame on which the memory unit is disposed. The hard disk is fixed on the frame helping to locate the memory unit in its place and in the navigation system.

Furthermore, the navigation device may comprise a cover, in which the memory unit is arranged, the cover comprising an electrically conducting outer surface and an insulating inner surface. When memory units, such as hard discs, are used in an electronic system an electronic shielding of the hard disk is preferable, as the electromagnetic radiation emitted from the hard disk could bother the proper functioning of other electronic systems incorporated in the navigation device. The outer surface of the cover may comprise an aluminium sheet. The insulating inner surface can be made of PET (polyethylene terephthalate) for avoiding electrical contacts of the memory unit to the cover. With the use of the absorbing means in combination with the cover comprising an electrically conducting outer surface a navigation device is provided, which at the same provides good damping properties, and which provides an efficient shielding of the memory unit.

According to a further aspect of the invention, the fixing strip is attached to the support plate at the first end, passes through a first cut-out section provided in the frame, is guided on at least part of a surface of the memory unit, passes through a second cut-out provided on the frame opposite the first cut-out and is fixed to the support plate at the second end. With this arrangement of the fixing strip, the assembly consisting of support plate, frame and cover comprising the memory unit can be held together. The fixing strip will be arranged in such a way, that the arrangement of the different parts relative to each other cannot be changed. Especially the fixing strip ensures that the absorbing means comprising the spring element and the damping element stay at a predetermined place, even when the navigation device or the memory unit mounting system is held in different orientations. Furthermore, the fixing strip also limits the movement of the memory unit relative to the support plate in the horizontal direction. During the assembly process or during transportation before the memory unit mounting system is fixedly attached to the housing of the navigation device, the fixing strip ensures that the absorbing means with the spring element and the damping element will stay at their respective places.

According to another aspect of the invention, four spring elements are provided, which are attached to the frame and which hold the memory unit provided on the frame in a horizontal orientation. Furthermore, the four spring elements may be provided in such a way that they are attached to the frame in the neighbourhood of the edges of the carrier.

According to a further aspect of the invention, said at least one damping element is attached to the surface of the frame facing the support plate in spaced relation to the support plate. The spring element is configured in such a way, that when carrying the weight of the memory unit it has a length which is larger than the length of the damping element. As the damping element is attached to the frame and the spring element is provided between the frame and the support plate, the damping element is arranged in spaced relation to the support plate. As a consequence, the damping element is in its position of rest and is not deformed due to the weight of the memory unit. This helps to get the optimum absorbing characteristics of the damping element, as the full displacement or the full deformation of the damping element can be used for absorbing shocks or vibrations. If the damping element were already deformed, the damping characteristics would be deteriorated.

According to a further aspect of the invention, each damping element is arranged inside the spring element, the spring element being configured in such a way, that in the position of rest of the spring element, in which it supports the memory unit, the damping element is arranged in spaced relation to the support plate.

When a force is applied to the mounting system so that the memory unit moves relative to the support plate, the movement should be guided. Therefore, according to a further embodiment of the invention the damping element comprises a recess provided on the surface facing the support plate. The support plate itself may comprise guiding pins fixed to the support plate, which engage the recess provided in the damper and which guide the movement of the memory unit. The guiding pins may be press-fitted into recesses provided in the support plate.

Furthermore, the support plate may comprise a vertically protecting tab situated between two horizontally arranged projections of the frame, the projections limiting maximum horizontal movement of the memory unit. The two vertically projecting tabs help to further limit the movement of the memory unit relative to the support plate. When there is a large excursion of the memory unit relative to the support plate in the horizontal plane, there exists the risk that the absorbing means with its spring element and damping elements are moved out of their locations provided in the system. In this case, the damping of the memory unit could not be assured.

According to a further aspect of the invention, the support plate is fixed to the bottom surface of the navigation device and is part of the bottom surface of the navigation device. In the case, the hard disk is to be replaced or should be repaired it is easy to remove the support plate and the memory unit mounting system, which may be screwed to the housing of the navigation device. By removing the support plate, the complete memory unit mounting system is removed, as the board plate, the carrier and the cover comprising the hard disk is held together by the fixing strip or by the two vertically disposed resilient extensions of the cover.

Further aspects of the invention will become apparent to the person skilled in the art with the description of preferred embodiments of the invention with reference to the accompanying drawings, in which
- Fig. 1: is a perspective view of the bottom of a navigation device comprising absorbing means for absorbing shock and/or vibrations;
- Fig. 2: is a perspective view of a memory unit mounting system for mounting a memory unit in the navigation device of Fig. 1;
- Figs. 3a and 3b: show side elevation views of the mounting system of Fig. 2;
- Fig. 4: is a cross-sectional view of a damping element used for absorbing shock and/or vibration;
- Fig. 5: is a perspective view of a support plate carrying the memory unit;
- Fig. 6: is a perspective view of the bottom surface of a carrier on which the memory unit is disposed;
- Fig. 7: shows in larger scale the arrangement of the damping element at the carrier;
- Fig. 8: shows a cover in which the memory unit is disposed and shows the fixing strip partly wrapped around the cover;
- Fig. 9: shows an embodiment of the memory unit mounting system in a perspective view not forming part of the invention;
- Fig. 10: shows a perspective exploded view of the memory unit mounting system of Fig. 9, and
- Fig. 11: shows a perspective view of the bottom of the carrier with the attached absorbing means.

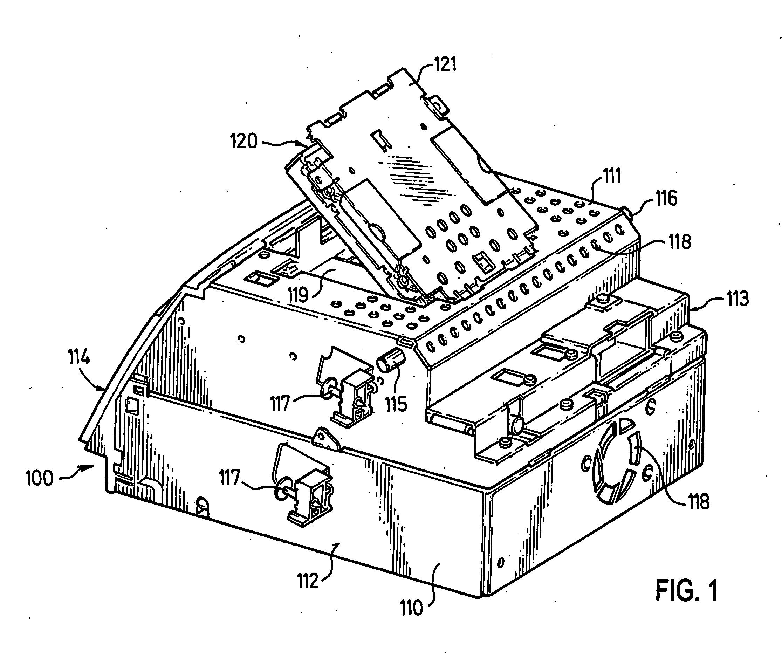

In Fig. 1 a navigation device 100 is shown in a perspective view. The navigation device is installed in a housing 110, the housing 110 comprising a bottom side 111 and two lateral sides 112 and 113. On a front side 114 of the housing an operation module (not shown) is installed which is used to control the navigation device. It should be understood that the navigation device is not limited to an electronic module comprising a navigation module. The navigation device is normally part of a multi-media module comprised in the housing 110 comprising an audio module, a radio module and/or a telecommunication module. For positioning the housing in a dashboard (not shown) of a vehicle, the housing comprises two pins 115, 116 which help to locate the housing 110 in recesses provided in the dashboard. The housing is then connected to the dashboard using the fixing means 117. The navigation system 100 further comprises a memory unit mounting module 120, in which a hard disk for storing all the data necessary to guide the user of the vehicle from the present position to a predetermined destination location is installed. The mounting module or mounting system 120 comprises a support plate 121. In the embodiment shown, the mounting module 120 is not completely introduced into the housing 110. The mounting module 120 can be introduced into a recess 119 provided in the bottom side 111 of the housing 110 by pivoting the module 120 in a position in which support plate 121 is flush with the bottom side 111 of the housing. The housing 110 further comprises several cut-outs 118 in the housing, which help to dissipate the heat produced of the electronic components of the navigation device 100.

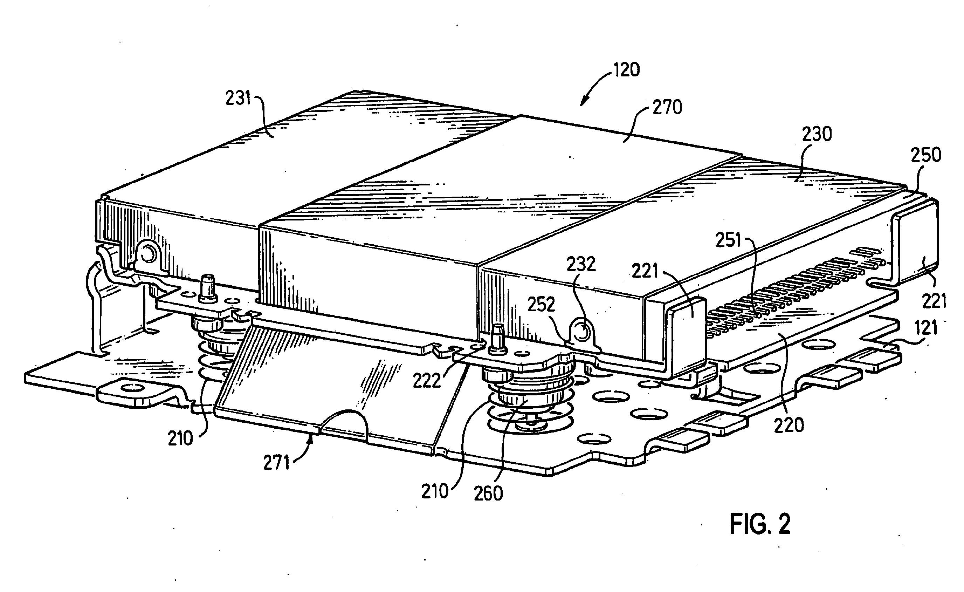

In Fig. 2 the memory unit mounting system or mounting module 120 is shown. In the orientation, as shown in Fig. 2, the mounting module 120 is positioned in the dashboard of the vehicle. When the navigation device 100 is finally installed in the vehicle, the support plate 121, which builds a part of the bottom side 111 of the housing 110, carries four spring elements 210, only two of them being visible in Fig. 2. The four spring elements 210 support a frame 220. The frame 220 carries a cover 230, in which a memory unit 250 is installed. The memory unit 250 or the hard disk comprises all the necessary data needed for the navigation device to calculate the route to a predetermined destination location. On the one side of the hard disk contact pins 251 are arranged. A connector (not shown) is connected to the contact pins 251 in order to assure a data exchange with the other components of the navigation device. In order to facilitate the fixing of the connector, the frame 220 comprises two vertically upstanding arms 221 which help to correctly connect the connector to the contact pins 251. When a hard disk is used in a navigation device, it has to be ensured that the electromagnetic irradiation emitted from the hard disk does not interfere with the other electronic components of the navigation device. Therefore, the cover 230 has an electrically conducting outer surface 231 (e.g. aluminium or any other light-weight electrically conducting material). The inner surface of the cover is coated with an insulating inner surface in order to assure that there is no electrical contact between the hard disk and the cover. The hard disk is fixed to the cover by protrusions 252 of the hard disk 250 which engage recesses 232 provided in the cover 230.

The weight of the hard disk, the cover and the frame 220 is carried by the four spring elements 210. The spring elements 210 help to absorb shocks applied to the hard disk in direction of the support plate 121. On the side of the frame 220 facing the support plate 121, damping elements 260 are provided. The damping elements are filled with silicone oil, the casing of the damping element being made of an elastic material. The damping elements 260 are attached to the frame 220. The elastic spring elements 210 are configured in such a way, that in the position of rest, when they carry the weight of the frame 220 the hard disk 250, and the cover 230, the spring elements 210 have a vertical extension which is larger than the height of the damping elements 260. The damping elements 260 are arranged in spaced relationship to the support plate 121. At the position of rest they are not compressed, as the whole weight is carried by the spring elements 210. When a large force is applied to the navigation device, so that the hard disk 250 moves in the direction of the support plate, the movement of the hard disk is first decelerated by the spring elements. When the hard disk is further moving in direction of the support plate, the damping elements 260 will contact the support plate 121 and will be deformed in dependence of the force applied to the hard disk. As the damping elements 260 are not deformed in the position of rest, they can decelerate the movement of the hard disk much better than it would be the case, if the damping elements were supporting the hard disk 250.

Furthermore, a fixing strip 270 is provided. The fixing strip 270 further helps to maintain the relative position of the support plate 121, the frame 220 and the cover 230 relative to each other. The fixing strip 270 may have a self-adhesive inner surface and may be attached to the bottom surface of the support plate 220 with the first end 271. The fixing strip is then passed through a first cut-out section 222 provided in the frame 220. The fixing strip is then wrapped around the cover 230 before it passes through a second cut-out section (not shown) provided in the frame 220, the second end being also attached to the bottom surface of the support plate 121.

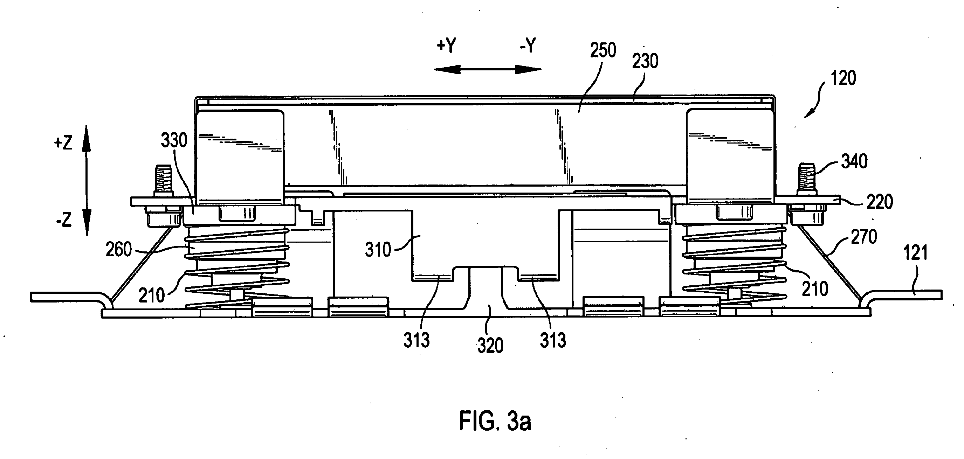

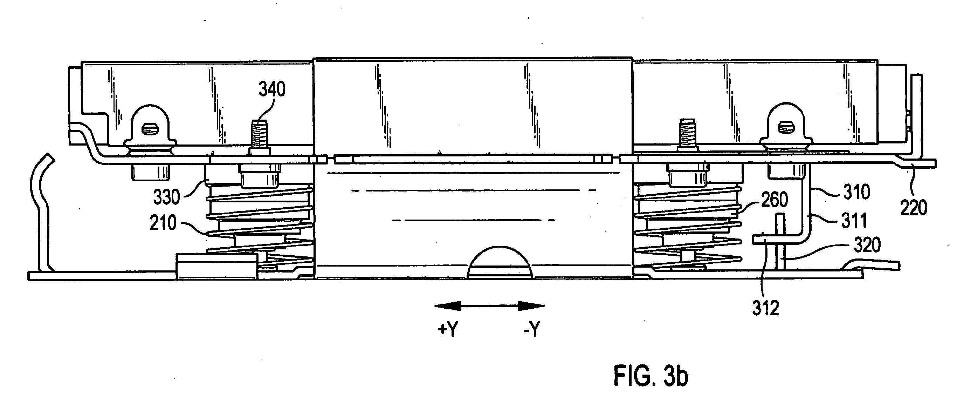

As can be also seen in Figs. 3a and 3b, the fixing strip helps to keep the hard disk 250 in its place. In Fig. 3a a side elevation view of the mounting system 120 is shown. The fixing strip 270 helps to limit the movement of the hard disk comprised in the cover 230 in the direction opposite to the support plate (+Z direction). Furthermore, it helps to limit the movement of the hard disk 250 in the ±Y direction. The fixing strip is attached in such a way to the support plate 121 is wrapped around the housing 230 so that the movement in the ±Y or +Z direction is not becoming greater than a certain value, e.g. 2 mm. The fixing strip could be made of a PTFE glass fabric. The fixing strip does not influence the movement of the hard disk used by the absorbing elements (spring element plus damping element). However, the fixing strip helps to avoid that the spring element jumps out of its place. During the manufacturing process, the mounting system 120 is transported independently from the navigation device. During the whole manufacturing process, it has to be ensured that the absorbing function is still working, when the mounting system is fixed in its final position in the housing of the navigation device. If the spring element jumps out of its position provided on the support plate and provided on the bottom side of the frame 220, the damping elements 260 would have to carry the weight of the hard disk. In this case, the damping properties of the system would be deteriorated considerably.

In Figs. 3a and 3b another way of limiting the excursion of the hard disk 250 can be seen. The frame 220 comprises an L-shaped projection 310 comprising a vertically arranged section 311 and a horizontally positioned end section 312. The horizontally arranged section 312 is arranged substantially parallel to the frame 220. As can be seen in Fig. 3a, a vertically arranged projecting tab 320 is positioned in the middle of the two horizontally arranged sections 312 of the L-shaped projection 310. The protecting tab 320 also limits the movement of the frame 220 and therefore the movement of the hard disk 250, as the inner edges 313 of the sections 312 provide a stop for the projecting tab 320.

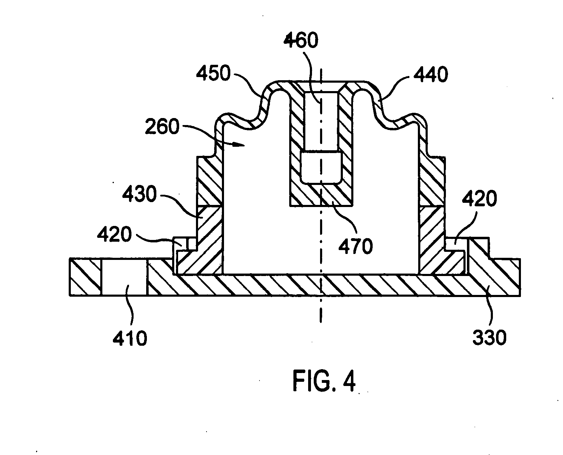

Furthermore, the arrangement of the absorbing system can be seen in more detail. The spring elements 210 abute on the upper surface of the support plate 121 and at the other end abute at a retention element 330. As will be explained later in connection with Figs. 4, 6 and 7, the retention element 330 is attached to the frame 220 by the screws 340. The damping element 260 is fixedly connected to the retention element 330 and does not come in contact with the support plate 121, when the hard disk 250 is at rest.

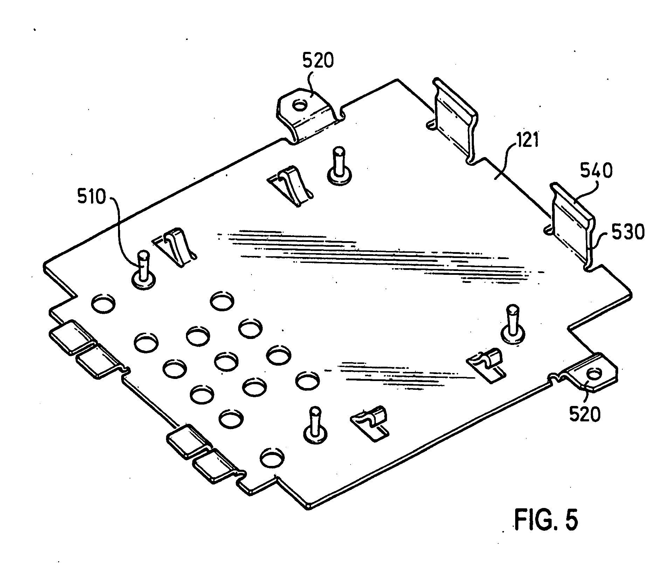

In Fig. 4, the damping element 260 is shown in a cross-sectional view. The retention element 330 is secured on the frame by inserting the screws 340 (not shown in Fig. 4) in the through-hole 410 provided in the retention element 330. The retention element 330 comprises a recess 420, in which a first part 430 of the damping element 260 can be positioned. The first part 430 of the damping element may be a synthetic or plastic material having a higher rigidity as a second part 440 of the damping element 260. The second part 440, configured as an elastomer bellows, comprises an S-shaped resilient surface 450 with a recessed portion 460 building a cavity, in which guiding pins 510, shown in Fig. 5, can be introduced. The inner part of the damping element 260 is filled with silicone oil. The silicon oil is often used for the fluid comprised in absorbing elements, as the silicone oil has a nearly temperature independent volume. When a force is applied to the hard disk 250, the damping element 260 will be moved in direction of the support plate 121. When the damping element 260 is in contact with the support plate 121, the S-shaped resilient surface 450 will be deformed in such a way that the guiding pin forces the resilient surface 450 in the direction of the retention element 330 until the lower surface 470 of the recess contacts the upper surface of the retention element 330. At the position of rest, the damping element 260 is shaped as shown in Fig. 4. The spring elements support the weight of the frame, and when the hard disk undergoes strong vibrations, the movement of the hard disk is first decelerated by the spring elements, and when the damping elements 260 contact the support plate 121, the damping elements 260 will further decelerate the movement of the hard disk.

In Fig. 5 the upper surface of the support plate 121 is shown. The support plate 121 comprises through-holes, in which the guiding pins 510 are press-fitted. The guiding pins 510 help to guide the movement of the damping elements and therefore help to guide the movement of the spring elements, as the damping elements are arranged inside the spring elements. The support plate furthermore comprises two laterally extending arms 520 with opening, in which fixing elements can be introduced to securely attach the support plate to the housing of the navigation device, as shown in Fig. 1. The support plate 121 further comprises two vertically arranged extensions 530, which have a curved end 540. This curved end 540 helps to pivot the memory unit mounting module 120 into a position where it is flush with the bottom surface of the housing, as indicated in Fig. 1.

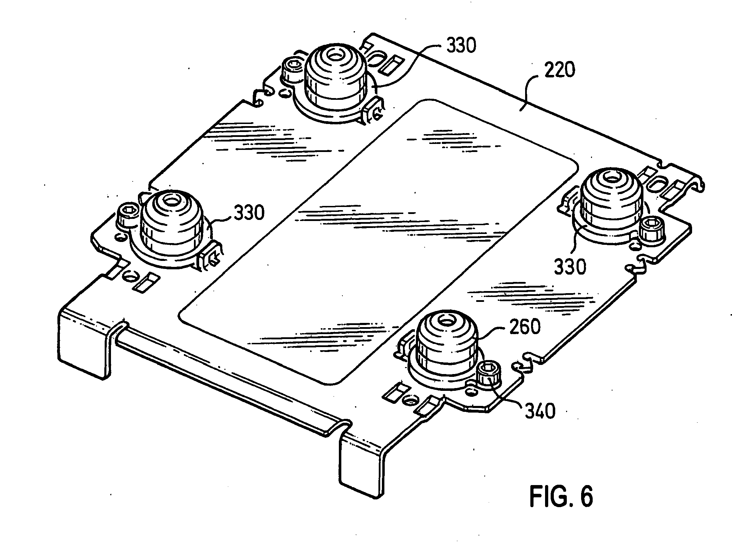

In Fig. 6 the lower surface of the frame 220 for holding the hard disk can be seen. As shown in the figures, the retention elements 330 are fixed to the frame 220 using the screws 340. Furthermore, the damping elements 260 are attached to the retention elements 330.

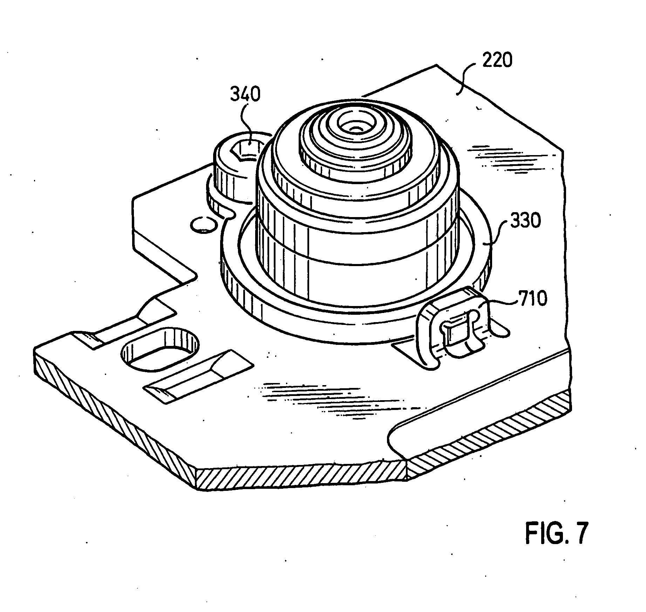

In Fig. 7 the fixing of the retention elements 330 to the cover 230 is shown in more detail. In the frame 220 an eyelet 710 is cut out and is directed in the vertical direction. In this eyelet 710 one end of the retention element 330, which is opposite to the through-hole 410, is introduced, the other end of the retention element 330 being fixed using the screw 340.

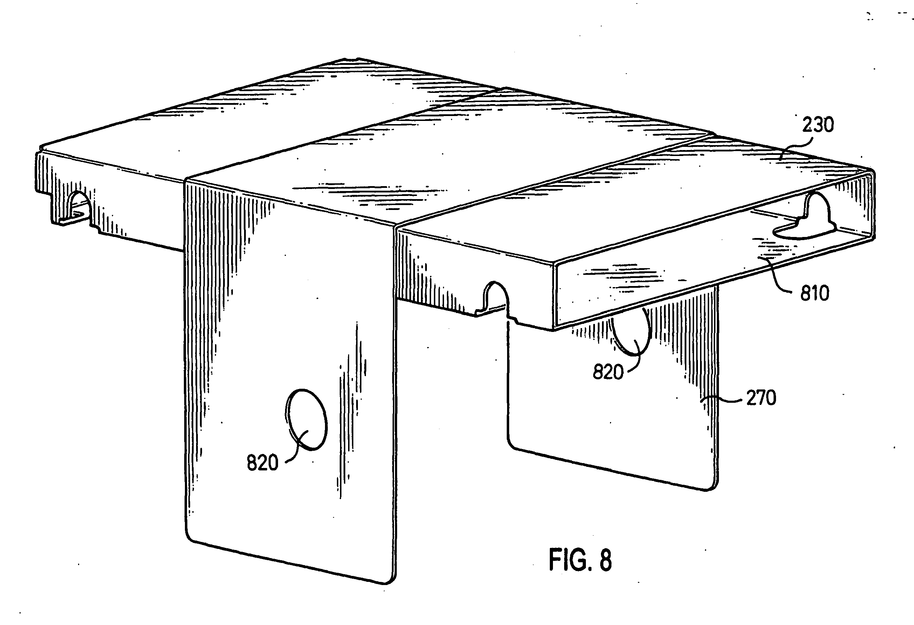

In Fig. 8 the cover 230 is shown with the fixing strip 270 already been wrapped around the upper surface of the cover 230. The hard disk (not shown) can be introduced into the front opening 810 of the cover 230. The fixing strip 270 further comprises openings 820. These openings are arranged in such a way that, when the fixing strip is wrapped around the support plate 121, the openings 820 are located in such a way that, when the support plate 121 is completely introduced into the housing of the navigation system, an electrical contact can be arranged between the bottom of the housing and the support plate, as may be seen in Fig. 1.

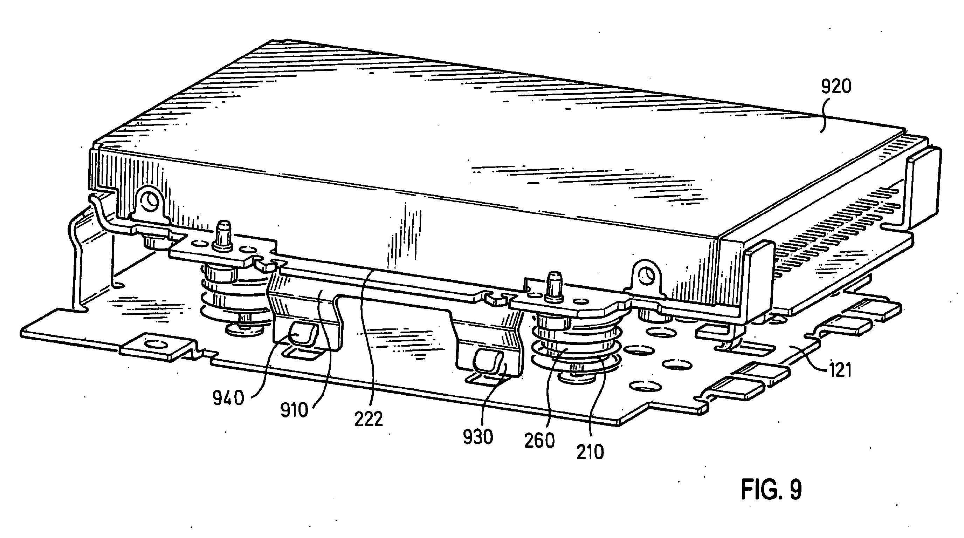

In Figs. 9 to 11 an embodiment not forming part of the invention is shown. In this embodiment, the fixing strip 270 is replaced by two vertically disposed resilient extensions 910, which are integrally built with the cover 920. The extensions 910 comprise two resilient arms with an opening 930 at their end, in which a hook 940, cut out in the support plate 121, is engaged. The extensions 910 help to limit the movement in the horizontal X-, Y-direction and in the vertical direction opposite to the support plate. As in Fig. 2, the vertically disposed extensions 910 pass through cut-outs sections 222 of the frame 220, as already explained in connection with Fig. 2. The other part of the absorbing mechanism (spring elements 210 and damping elements 260) corresponds to the embodiments shown in Figs. 1 to 8.

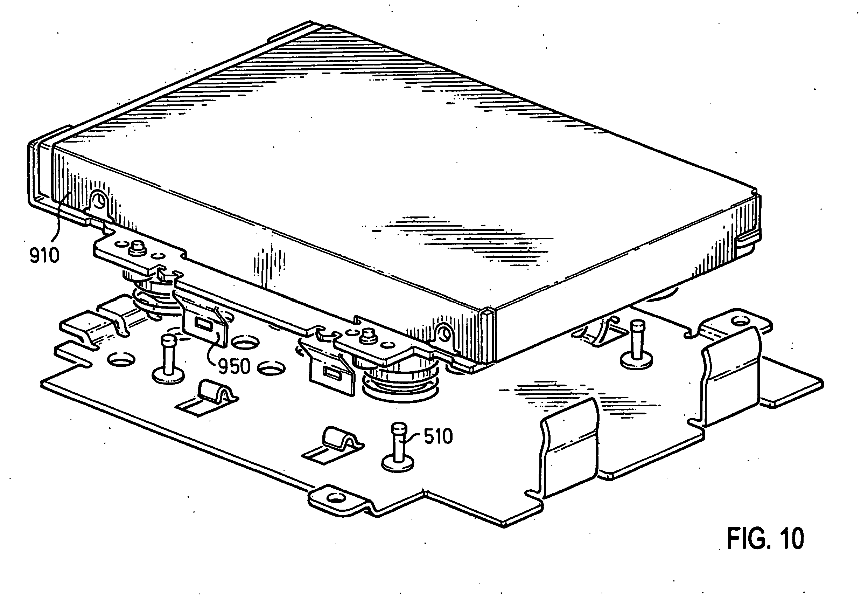

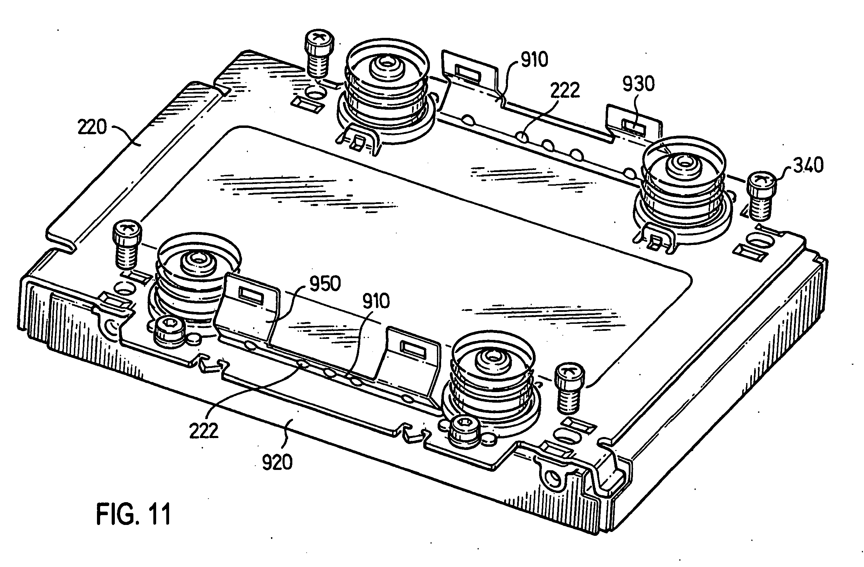

In Fig. 10 the memory unit mounting system of the embodiment of Fig. 9 is shown in an exploded view, showing the guiding pins 510, the extensions 910 and the arms 950. In Fig. 11 the frame 220 and the cover 920 are shown in a bottom view. As can be seen, the extensions 910 pass the cut-outs 222 provided in the frame 220. Furthermore, it is shown that the frame can be connected with the hard disk and to the cover using four threads 930.

In conclusion, this invention provides a memory unit mounting system and a navigation device comprising a hard disk, in which the hard disk can be installed protected against shocks or vibrations, and in which the hard disk comprises an electrostatic shielding. The absorbing system comprising a spring element and a damping element allows an effective absorption of shocks and/or vibrations, so that the hard disk can work even in environments where it is exposed to strong vibrations or shocks.

## Claims

1. Memory unit mounting system for mounting a memory unit (250) in a housing (110) of an on-board electronic system of a vehicle comprising:
- a support plate (121) on which said memory unit (250) is disposed,
- absorbing means arranged between said support plate (121) and said memory unit (250) for protecting said memory unit against shock and/or vibration, wherein the absorbing means comprises at least one spring element (210) supporting said memory unit, and at least one damping element (260) for absorbing shock and/or vibration of the memory unit, **characterized by** further comprising a fixing strip (270) attached to the support plate (121) and wrapped around at least a part of the memory unit, which limits the vertical movement of the memory unit (250) in the direction opposite to the support plate (121).

2. Mounting system according to claim 1, **characterized in that** said at least one damping element (260) is a resilient pad.

3. Mounting system according to claim 1 or 2, **characterized in that** the damping element (260) is filled with a silicon fluid, especially a silicone oil.

4. Mounting system according to any of claims 1 to 3, **characterized by** further comprising a frame (220) on which the memory unit (250) is disposed.

5. Mounting system according to any of claims 1 to 4, **characterized by** further comprising a cover (230) in which the memory unit (250) is arranged, the cover comprising an electrically conducting outer surface and an insulating inner surface.

6. Mounting system according to claim 1, **characterized in that** the fixing strip (270) is attached to the support plate (121) at the first end, passes through a first cut-out section (222) provided in the frame, is guided on at least part of a surface of the memory unit, passes through a second cut-out provided on the frame opposite the first cut-out and is fixed to the support plate (121) at the second end.

7. Mounting system according to claim 6, **characterized in that** the fixing strip (270) is arranged in such a way that it limits the movement of the memory unit in a horizontal direction.

8. Mounting system according to any of claims 1 to 7, **characterized in that** four spring elements (210) are provided which are attached to the frame and which hold the memory unit provided on the frame in a horizontal orientation.

9. Mounting system according to any of claims 4 to 8, **characterized in that** said at least one damping element (260) is attached to the surface of the frame (220) facing the support plate.

10. Mounting system according to any of claims 1 to 9, **characterized in that** each damping element (260) is arranged inside the spring element (210), the spring element being configured in such a way, that in the position of rest of the spring element (210) in which it supports the memory unit (250), the damping element (260) is arranged in spaced relation to the support plate (121).

11. Mounting system according to any of claims 1 to 10, **characterized in that** the damping element (260) comprises a recess (460) provided on the surface facing the support plate.

12. Mounting system according to claim 11, **characterized by** further comprising guiding pins (510) fixed to the support plate, which engage the recess provided in the damping element and which guide the movement of the memory unit.

13. Mounting system according to any of claims 1 to 12, **characterized in that** the support plate (121) comprises a vertically projecting tab (320) situated between two horizontally arranged projections (312) of the frame, the projections providing a stop for the maximum horizontal movement of the memory unit.

## Patentansprüche

1. Speichereinheit-Befestigungseinrichtung zum Befestigen einer Speichereinheit (250) in einem Gehäuse (110) eines Bordelektroniksystems eines Fahrzeugs, umfassend:
- eine Stützplatte (121), auf welcher die Speichereinheit (250) angeordnet ist,
- Stoßabsorptionsmittel, welche zwischen der Stützplatte (121) und der Speichereinheit (250) zum Schützen der Speichereinheit gegen Erschütterung und/oder Vibration angeordnet sind, wobei die Stoßabsorptionsmittel mindestens ein Federelement (210), welches die Speichereinheit stützt, und mindestens ein Dämpfelement (260) zum Absorbieren von Erschütterung und/oder Vibration der Speichereinheit umfassen, **dadurch gekennzeichnet, dass** sie weiterhin ein an der Stützplatte (121) angebrachtes und um mindestens einen Teil der Speichereinheit gewickeltes Halteband (270) umfasst, welches die vertikale Bewegung der Speichereinheit (250) in die der Stützplatte entgegengesetzte Richtung (121) begrenzt.

2. Befestigungseinrichtung nach Anspruch 1, **dadurch gekennzeichnet, dass** das mindestens eine Dämpfelement (260) ein elastisches Polster ist.

3. Befestigungseinrichtung nach Anspruch 1 oder 2, **dadurch gekennzeichnet, dass** das Dämpfelement (260) mit einer Silikonflüssigkeit, insbesondere einem Silikonöl, befüllt ist.

4. Befestigungseinrichtung nach einem der Ansprüche 1 bis 3, **dadurch gekennzeichnet, dass** sie weiterhin ein Gehäuse (220) umfasst, auf welchem die Speichereinheit (250) angeordnet ist.

5. Befestigungseinrichtung nach einem der Ansprüche 1 bis 4, **dadurch gekennzeichnet, dass** sie weiterhin eine Abdeckung (230) umfasst, in welcher die Speichereinheit (250) angeordnet ist, wobei die Abdeckung eine elektrisch leitende äußere Oberfläche und eine isolierende innere Oberfläche umfasst.

6. Befestigungseinrichtung nach Anspruch 1, **dadurch gekennzeichnet, dass** das Halteband (270) an der Stützplatte (121) an dem ersten Ende angebracht ist, durch einen in dem Gehäuse bereitgestellten ersten ausgeschnittenen Abschnitt (222) hindurchführt, an mindestens einem Teil einer Oberfläche der Speichereinheit geführt wird, durch einen zweiten Ausschnitt, welcher an dem Gehäuse entgegengesetzt zu dem ersten Ausschnitt bereitgestellt ist, hindurchführt und an der Stützplatte (121) an dem zweiten Ende befestigt ist.

7. Befestigungseinrichtung nach Anspruch 6, **dadurch gekennzeichnet, dass** das Halteband (270) derart angeordnet ist, dass es die Bewegung der Speichereinheit in einer horizontalen Richtung begrenzt.

8. Befestigungseinrichtung nach einem der Ansprüche 1 bis 7, **dadurch gekennzeichnet, dass** vier Federelemente (210) bereitgestellt sind, welche an dem Gehäuse angebracht sind und welche die an dem Gehäuse in einer horizontalen Orientierung bereitgestellte Speichereinheit halten.

9. Befestigungseinrichtung nach einem der Ansprüche 4 bis 8, **dadurch gekennzeichnet, dass** das mindestens eine Dämpfelement (260) an der Oberfläche des Gehäuses (220) der Stützplatte zugewendet angebracht ist.

10. Befestigungseinrichtung nach einem der Ansprüche 1 bis 9, **dadurch gekennzeichnet, dass** jedes Dämpfelement (260) innerhalb des Federelements (210) angeordnet ist, wobei das Federelement derart konfiguriert ist, dass in der Ruhelage des Federelements (210), in welcher es die Speichereinheit (250) stützt, das Dämpfelement (260) in Bezug auf die Stützplatte (121) abgesetzt angeordnet ist.

11. Befestigungseinrichtung nach einem der Ansprüche 1 bis 10, **dadurch gekennzeichnet, dass** das Dämpfelement (260) eine Aussparung (460), welche auf der der Stützplatte zugewandten Oberfläche bereitgestellt ist, umfasst.

12. Befestigungseinrichtung nach Anspruch 11, **dadurch gekennzeichnet, dass** sie weiterhin auf der Stützplatte befestigte Führungsstifte (510) umfasst, welche in die in dem Dämpfelement bereitgestellte Aussparung eingreifen und welche die Bewegung der Speichereinheit führen.

13. Befestigungseinrichtung nach einem der Ansprüche 1 bis 12, **dadurch gekennzeichnet, dass** die Stützplatte (121) einen sich vertikal erstreckenden Lappen (320) umfasst, welcher zwischen zwei horizontal angeordneten Erhebungen (312) des Gehäuses untergebracht ist, wobei die Erhebungen einen Anschlag für die maximale horizontale Bewegung der Speichereinheit bereitstellen.

## Revendications

1. Système de montage d'une unité de mémoire pour monter une unité de mémoire (250) dans un boîtier (110) d'un système électronique embarqué d'un véhicule, comprenant:
- une plaque support (121), sur laquelle est disposée ladite unité de mémoire (250),
- un moyen d'absorption, arrangé entre ladite plaque support (121) et ladite unité de mémoire (250), en vue de protéger ladite unité de mémoire contre des impacts et/ou vibrations, dans lequel le moyen d'absorption comprend au moins un élément ressort (210) supportant ladite unité de mémoire, et au moins un élément amortisseur (260) pour absorber des impacts et/ou vibrations sur l'unité de mémoire, **caractérisé en ce qu'**il comprend en outre une bande de fixation (270) accrochée à la plaque support (121) et enveloppée autour au moins une partie de l'unité de mémoire, ce qui limite le déplacement vertical de l'unité de mémoire (250) dans la direction opposée à la plaque support (121).

2. Système de montage selon la revendication 1, **caractérisé en ce que** ledit au moins un élément amortisseur (260) est un tampon souple.

3. Système de montage selon la revendication 1 ou 2, **caractérisé en ce que** l'élément amortisseur (260) est rempli d'un fluide de silicone, en particulier une huile de silicone.

4. Système de montage selon l'une quelconque des revendications 1 à 3, **caractérisé en ce qu'**il comprend en outre un cadre (220) sur lequel est disposée l'unité de mémoire (250).

5. Système de montage selon l'une quelconque des revendications 1 à 4, **caractérisé en ce qu'**il comprend en outre un couvercle (230) dans lequel est arrangée l'unité de mémoire (250), le couvercle comprenant une surface extérieure électriquement conductrice et une surface intérieure isolante.

6. Système de montage selon la revendication 1, **caractérisé en ce que** la bande de fixation (270) est accrochée à la plaque support (121) à la première extrémité, passe à travers une première section découpée (222) prévue dans le cadre, est guidée sur au moins une partie d'une surface de l'unité de mémoire, passe à travers une deuxième découpe prévue sur le cadre à l'opposé de la première découpe, et est fixée sur la plaque support (121) à la deuxième extrémité.

7. Système de montage selon la revendication 6, **caractérisé en ce que** la bande de fixation (270) est arrangée de telle manière qu'elle limite le déplacement de l'unité de mémoire dans une direction horizontale.

8. Système de montage selon l'une quelconque des revendications 1 à 7, **caractérisé en ce qu'**on prévoit quatre éléments ressort (210), qui sont accrochés au cadre et qui maintiennent l'unité de mémoire mise en place sur le cadre dans une orientation horizontale.

9. Système de montage selon l'une quelconque des revendications 4 à 8, **caractérisé en ce que** ledit au moins un élément amortisseur (260) est accroché à la surface du cadre (220) en face de la plaque support.

10. Système de montage selon l'une quelconque des revendications 1 à 9, **caractérisé en ce que** chaque élément amortisseur (260) est arrangé à l'intérieur de l'élément ressort (210), l'élément ressort étant configuré de telle manière que, dans la position de repos de l'élément ressort (210), dans laquelle il supporte l'unité de mémoire (250), l'élément amortisseur (260) est arrangé de manière espacée par rapport à la plaque support (121).

11. Système de montage selon l'une quelconque des revendications 1 à 10, **caractérisé en ce que** l'élément amortisseur (260) comprend une échancrure (460) prévue sur la surface en vis-à-vis de la plaque support.

12. Système de montage selon la revendication 11, **caractérisé en ce qu'**il comprend en outre des tenons de guidage (510) fixés sur la plaque support, qui s'engagent dans l'échancrure prévue dans l'élément amortisseur et qui guident le déplacement de l'unité de mémoire.

13. Système de montage selon l'une quelconque des revendications 1 à 12, **caractérisé en ce que** la plaque support (121) comprend une patte (320) faisant saillie verticalement, située entre deux protubérances (312) du cadre arrangés horizontalement, les protubérances fournissant un arrêt pour le déplacement horizontal maximal de l'unité de mémoire.
